# EUROPEAN PATENT APPLICATION

(11) **EP 4 764 688 A1**
(43) Date of publication of application: **24.06.2026**
(21) Application number: 24383395.1
(22) Date of filing: 18.12.2024
(51) Int. Cl.: G02F 1/35, H01S 3/067

(54) **SYSTEM FOR SUPERCONTINUUM GENERATION**

(71) Applicant: Fyla Laser, S.L., 46980 Paterna (Valencia) (ES)
(72) Inventor: PÉREZ MILLÁN, Pere, 46980 PATERNA (VALENCIA) (ES); TORRES PEIRÓ, Salvador, 46980 PATERNA (VALENCIA) (ES); OTGON, Viorel, 46980 PATERNA (VALENCIA) (ES); GARCÍA ELMOUAK, Omar, 46980 PATERNA (VALENCIA) (ES)
(74) Representative: González Poveda, Sara

(57) **Abstract**

A system (12) for generating supercontinuum pulsed emission having a substantially flat spectrum, the system comprising: a fiber mode-locked oscillator (1) comprising a laser cavity (2); an amplifier (10); a non-linear optical fiber (11); the laser cavity comprises a Fiber Bragg Grating element (5) and a Semiconductor Saturable Absorber Mirror (8) configured to act as first and second mirrors respectively, the Fiber Bragg Grating element (5) having: a bandwidth between 3 nm and 15 nm, a reflectivity between 10 - 50%, and a dispersion value such that the total dispersion of the laser cavity is in the anomalous dispersion regime.

## Description

### TECHNICAL FIELD

The present application generally related to optical systems, and more particularly to optical fiber systems and methods for generating supercontinuum pulsed emission having a substantially flat spectrum.

### BACKGROUND

Supercontinuum light is a broadband, spatially coherent emission generated through nonlinear optical effects when a high-intensity laser pulse interacts with a nonlinear medium, often a photonic crystal fiber (PCF) or highly nonlinear optical fiber. The combination of nonlinear optical effects such as self-phase modulation, four-wave mixing and soliton fission within the fiber, among other, results in the expansion of the input laser's narrowband spectrum into a continuous, wide spectrum that can cover wavelengths from the visible to the near-infrared and beyond, depending on the system configuration.

In currently available supercontinuum sources and existing setups, however, not all light is converted into this broad spectrum. Traditional supercontinuum sources often exhibit a pronounced spectral peak around the pump wavelength (e.g., 1060 nm), which results from the presence of residual non-pulsed or continuous-wave (CW) components in the pump light. These residual components, lacking the requisite peak intensity, do not contribute to the nonlinear broadening and remain unconverted, manifesting as a spectral peak in the output. Examples of residual non-pulsed or CW components may be light generated by Amplified Stimulated Emission (ASE), light generated by Raman emission, or dispersive waves such as Kelly sidebands. This is particularly detrimental for practical applications such as spectroscopy, microscopy and telecommunications, where a uniform illumination (i.e., flat spectral shape having an even distribution of light across wavelengths) is critical for accurate measurements and imaging.

It is thus necessary to propose an effective solution for eliminating the residual pump peaks in supercontinuum without increasing the complexity and overall cost of the supercontinuum sources.

### SUMMARY OF THE INVENTION

The invention is directed to a novel system and method for generating a supercontinuum light source with a substantially flat spectral profile, addressing the common drawback of spectral peaks near the pump wavelength that are present in existing supercontinuum sources.

In a first aspect of the present invention, there is disclosed a system for generating supercontinuum pulsed emission having a substantially flat spectrum, the system comprising: a fiber mode-locked oscillator comprising a laser cavity, an amplifier and a non-linear optical fiber. The laser cavity comprises a Fiber Bragg Grating (FBG) element and a Semiconductor Saturable Absorber Mirror (SESAM) configured to act as first and second mirrors respectively, the FBG element having a bandwidth between 3-15 nm, a reflectivity between 10-50% and a dispersion value such that the total dispersion of the laser cavity is in the anomalous dispersion regime.

A bandwidth below 3 nm having the required low dispersion would limit the spectral range of the pulse, reducing the oscillator's ability to generate broad spectrum pulses suitable for supercontinuum generation. A bandwidth exceeding 15 nm is undesirable because it leads to significant temporal stretching of the pulse due to dispersion effects. This temporal stretching reduces the peak power of the pulse, which is critical for nonlinear processes in the non-linear optical fiber used for supercontinuum generation. A high peak power is required to achieve supercontinuum broadening, and excessive bandwidth lowers the energy density in the pulse.

A reflectivity between 10-50% provides the optimal balance between retaining enough energy in the cavity and allowing sufficient pulse energy to escape it for amplification and nonlinear propagation. A sufficiently high reflectivity is necessary to sustain the optical feedback required for mode-locking and stable pulse formation within the cavity. A reflectivity below 10% would hinder the ability of the oscillator to self-start and the feedback would be too weak to reliably establish and maintain the desired oscillatory behavior. On the other hand, excessively high reflectivity (i.e., above 50%) would stimulate the generation of undesired dispersive waves (such as Kelly sidebands), and unduly increase the complexity of the manufacturing process.

This solution provides a system that suppresses or eliminates the residual pump peaks in supercontinuum pulsed emission while maintaining optimal pulse quality, energy and stability. The inventors have surprisingly found that the combination of the specified technical features provides a system for generating supercontinuum pulsed emission having a stable pulse while suppressing residual pump peaks, thus providing enhanced flatness of the resultant emission spectrum. Specifically, the inventors have surprisingly found that when using a fiber mode-locked oscillator having a laser cavity comprising the technical features described in the first aspect of the present invention, the power spectral density of dispersive waves (such as Kelly sidebands) at the output of the oscillator is reduced, effectively suppressing them.

In a possible implementation form of the first aspect, the FBG element is configured to act as a first output coupler of the laser cavity. This allows for the precise control of the laser cavity's output coupling ratio, which may be optimized for maximum supercontinuum generation efficiency. This configuration simplifies the laser cavity design, reducing manufacturing complexity and costs, and improving the stability of the laser system by providing a consistent and controlled feedback mechanism.

In a further possible implementation form of the first aspect, the absolute dispersion value of the FBG element is higher than the optical fiber's dispersion value. This ensures that the dispersion is managed predominantly within the grating, leading to better control over pulse shaping and compression, resulting in cleaner and more intense supercontinuum pulses. Optionally, the dispersion value of the FBG element is between 0.1 ps/nm and 5 ps/nm.

In a further possible implementation form of the first aspect, the bandwidth value of the FBG element is between 11-15 nm, preferably between 13-14 nm, more preferably 13.5 nm. This enhances the spectral brightness and intensity of the supercontinuum pulses, which is advantageous for applications requiring high power density across a broad spectrum. By fine tuning the bandwidth value to such ranges, the system achieves a balance between dispersion management and nonlinear effects, leading to a more efficient and stable supercontinuum generation process.

In a further possible implementation form of the first aspect, the reflectivity of the FBG element is between 5-20%, preferably between 10-20%, more preferably 11%. This ensures optimal feedback within the laser system, leading to a more stable and efficient lasing operation.

In a further possible implementation form of the first aspect, the SESAM has an absorbance between 10-60% and a relaxation time value between 500 fs and 20 ps. Preferably, the SESAM has an absorbance between 10-40% and a relaxation time value between 500 fs and 15 ps. More preferably, the SESAM has an absorbance of about 19% and a relaxation time of about 10 ps. This enables fast and effective modulation of the laser beam, allowing for a balance between high pulse energy and low pulse distortion.

In a further possible implementation form of the first aspect, the laser cavity comprises an in-line fiber polarizer configured to act as a polarizer. Alternatively, or additionally, the laser cavity comprises a Polarized Output Coupler configured to act as a polarizer and as a second output coupler of the laser cavity.

In a further possible implementation form of the first aspect, the oscillator comprises a highly doped polarization maintaining active fiber. Preferably, the active fiber is an Ytterbium-doped polarization maintaining fiber. This provides high gain, consistent polarization of the laser output and efficient lasing action, leading to a compact and energy-efficient system.

In a further possible implementation form of the first aspect, the non-linear optical fiber is a Photonic Crystal Fiber (PCF).

In a further possible implementation form of the first aspect, the oscillator is configured to emit laser pulses with an optical spectrum having a main spectral peak and one or more secondary peaks, the power spectral density of the main spectral peak being at least 5 dB higher than that of the one or more secondary peaks. Preferably, the power spectral density of the main spectral peak is 10 dB higher than that of the one or more secondary peaks. More preferably, the power spectral density of the main spectral peak is 20 dB higher than that of the one or more secondary peaks.

In a further possible implementation form of the first aspect, a pulse at an output of the oscillator comprises a pulse duration between 100 fs - 10 ps, a bandwidth between 3 - 20 nm and an output power between 0.1 - 50 mW. These parameters ensure that the system produces pulses with sufficient spectral content and energy to effectively pump the non-linear optical fiber, facilitating efficient supercontinuum generation.

In a further possible implementation form of the first aspect, the FBG element is a Chirped Fiber Bragg Grating (CFBG). This allows for the compensation of dispersion effects in the fiber, leading to the preservation of pulse shape and duration during propagation, enhancing the quality of the output pulse.

In a second aspect of the present invention, there is provided a method for generating supercontinuum pulsed emission having a substantially flat spectrum with the system according to the first aspect of the present invention. The method comprises the steps of:
a) Providing a system according to any of the embodiments described for the first aspect of the present invention;
b) Producing, by the fiber mode-locked oscillator, at least one seed pulse with given optical properties;
c) Controlling, by the FBG element, the power spectral density of the oscillator's emission such that the difference between the main spectral peak and the one or more secondary peaks is of at least 5 dB;
d) Amplifying, by the amplifier, the resulting pulse from step c);
e) Pumping the non-linear optical fiber with the amplified pulse of step d).

In a further possible implementation form of the second aspect, the method further comprises generating a spectrum having variations in spectral density power below 10 dB within ±50 nm around the seed pulse wavelength, more preferably 5 dB within ±50 nm around the seed pulse wavelength, more preferably 5 dB within ±25 nm around the seed pulse wavelength.

In a third aspect of the present invention, there is provided a mode-locked fiber laser oscillator suitable for supercontinuum generation, the oscillator having a dispersive wave suppression mechanism comprising a laser cavity, an amplifier and a non-linear optical fiber. The laser cavity comprises a Fiber Bragg Grating (FBG) element and a Semiconductor Saturable Absorber Mirror (SESAM) configured to act as first and second mirrors respectively, the FBG element having a bandwidth between 3-15 nm, a reflectivity between 10-50% and a dispersion value such that the total dispersion of the laser cavity is in the anomalous dispersion regime.

In a possible implementation form of the third aspect, the FBG element is configured to act as a first output coupler of the laser cavity.

In a further possible implementation form of the third aspect, the absolute dispersion value of the FBG element is higher than the optical fiber's dispersion value. Optionally, the dispersion value of the FBG element is between 0.1 ps/nm and 5 ps/nm.

In a further possible implementation form of the third aspect, the bandwidth value of the FBG element is between 11-15 nm, preferably between 13-14 nm, more preferably 13.5 nm.

In a further possible implementation form of the third aspect, the reflectivity of the FBG element is between 5-20%, preferably between 10-20%, more preferably 11%.

In a further possible implementation form of the third aspect, the SESAM has an absorbance between 10-60% and a relaxation time value between 500 fs and 20 ps. Preferably, the SESAM has an absorbance between 10-40% and a relaxation time value between 500 fs and 15 ps. More preferably, the SESAM has an absorbance of about 19% and a relaxation time of about 10 ps.

In a further possible implementation form of the third aspect, the laser cavity comprises an in-line fiber polarizer configured to act as a polarizer. Alternatively, or additionally, the laser cavity comprises a Polarized Output Coupler configured to act as a polarizer and as a second output coupler of the laser cavity.

In a further possible implementation form of the third aspect, the oscillator comprises a highly doped polarization maintaining active fiber. Preferably, the active fiber is an Ytterbium-doped polarization maintaining fiber.

In a further possible implementation form of the third aspect, the oscillator is configured to emit laser pulses with an optical spectrum having a main spectral peak and one or more secondary peaks, the power spectral density of the main spectral peak being at least 5 dB higher than that of the one or more secondary peaks. Preferably, the power spectral density of the main spectral peak is 10 dB higher than that of the one or more secondary peaks. More preferably, the power spectral density of the main spectral peak is 20 dB higher than that of the one or more secondary peaks.

In a further possible implementation form of the third aspect, a pulse at an output of the oscillator comprises a pulse duration between 100 fs - 10 ps, a bandwidth between 3 - 20 nm and an output power between 0.1 - 50 mW.

In a further possible implementation form of the third aspect, the FBG element is a Chirped Fiber Bragg Grating (CFBG).

### BRIEF DESCRIPTION OF THE DRAWINGS

A specific implementation of the present invention will now be described, by way of example only, and with reference to the accompanying drawings in which:
Figure 1 schematically illustrates components within the system for generating a supercontinuum pulsed emission having a substantially flat spectrum according to the present invention;
Figure 2 is a schematical illustration of the components of the oscillator of Figure 1;
Figure 3 is a graphical representation of the spectrum output from the fiber mode-locked oscillator according to the present invention;
Figure 4 is a graphical representation of the spectrum output of the supercontinuum generated with the system according to the present invention.
Figure 5 is a graphical representation of a typical spectrum output from a fiber mode-locked oscillator not according to the present invention (comparative example);
Figure 6 is a graphical representation of the spectrum output of the supercontinuum generated with a system having the spectrum output from the fiber mode-locked oscillator of Figure 5 not according to the present invention comparative example).
Figure 7 is a graphical representation of another typical spectrum output from a fiber mode-locked oscillator not according to the present invention (comparative example);
Figure 8 is a graphical representation of the spectrum output of the supercontinuum generated with a system having the spectrum output from the fiber mode-locked oscillator of Figure 7 (comparative example).

### DETAILED DESCRIPTION

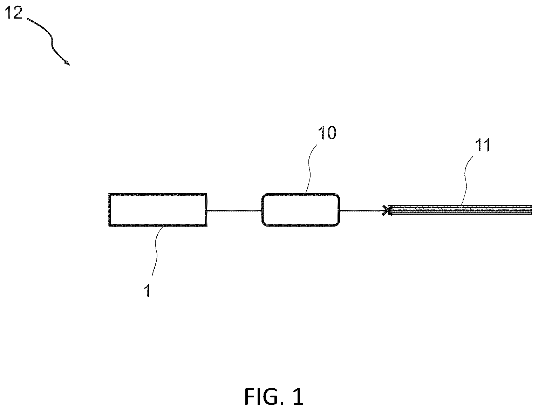

Referring to Figure 1, the present invention provides a system 12 for the generation of a supercontinuum pulsed emission having a substantially flat spectrum. The present system 12 comprises a fiber mode-locked oscillator 1, an amplifier 10 and a non-linear optical fiber 11.

Within this specification, reference to 'substantially flat spectrum' shall mean that the spectral power distribution of the supercontinuum pulsed emission is relatively uniform across a wide range of wavelengths, without significant peaks. This means that the emitted light does not have large variations in power at different wavelengths, the intensity of the light not varying significantly over the spectrum. In particular, a substantially flat spectrum may preferably be defined by a spectrum having variations in spectral density power below 10 dB within ±50 nm around the seed pulse wavelength, more preferably 5 dB within ±50 nm around the seed pulse wavelength, more preferably 5 dB within ±25 nm around the seed pulse wavelength. The present system may be configured for use in a plurality of applications, particularly those in which accurate measurement and imaging are critical, such as spectroscopy, microscopy and telecommunications.

Reference within this specification to a fiber mode-locked oscillator or oscillator shall mean a laser system constructed predominantly using optical fibers, designed to generate ultrashort optical pulses through the process of mode-locking. Mode-locking is a technique used to create a fixed phase relationship between longitudinal modes of the laser cavity, enabling the generation of pulses of light with extremely short durations, typically in the femtosecond to picosecond range.

The term amplifier refers to a device capable of boosting the energy or peak power of the pulses generated by the oscillator to levels sufficient for supercontinuum generation in the subsequent stage.

Non-linear optical fiber 11 may be a Photonic Crystal Fiber (PCF), a highly non-linear fiber (HNLF), or a tapered fiber with targeted dispersion and non-linearity parameters. The term non-linear optical fiber shall mean an optical fiber designed to exploit the non-linear properties of its material to achieve supercontinuum generation when pumped with high-intensity pulses.

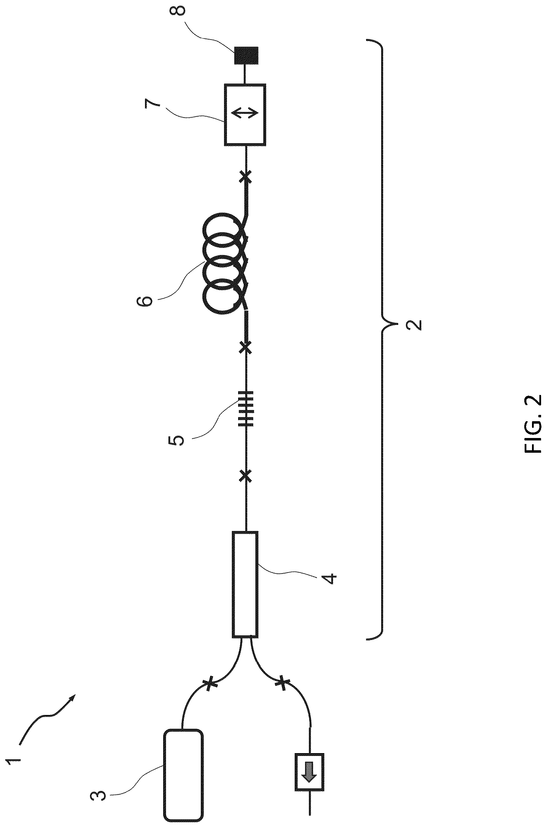

Referring to Figure 1 and Figure 2, the present system 12 comprises an oscillator 1 comprising a laser cavity 2. The laser cavity 2 comprises a FBG element 5 and a SESAM 8 which are configured to act as first and second mirrors respectively. The FBG element 5 is characterized in that it has a bandwidth between 3 nm and 15 nm, a reflectivity between 10% and 50%, and a dispersion value such that the total dispersion value of the laser cavity 2 is in the anomalous dispersion regime and close to zero.

Figure 2 shows the oscillator 1 of a preferred embodiment of system 12. According to this preferred embodiment, a semiconductor laser diode is used as the pump 3. Pump 3 is configured to emit and supply a continuous wave optical signal which may be approximately 110 mW. According to the present preferred embodiment, the wavelength of pump 3 is selected to be 976 nm, though other wavelengths may be selected. The optical signal supplied by pump 3 is introduced into the laser cavity 2 by means of a wave division multiplexer 4 (WDM). The WDM 4 combines two fiber ports: one optimized for 976 nm, connected to the pump source 3, and another for 1064 nm, serving as the laser cavity's 2 output port, into a common port. The optical signal supplied by pump 3 is directly spliced into the 976 nm fiber port of the WDM 4. This configuration allows the WDM 4 to couple the 976 nm light into cavity 2 while directing the 1064 nm output light to the appropriate port. This design prevents the injection of back reflection from cavity 2 into the laser diode, ensuring stable operation. Alternative coupling modules with equivalent functionality may be used without departing from the scope of the present invention.

From the WDM 4 common port, the optical signal enters cavity 2, where the FBG element 5 is spliced to act as both a mirror and an output coupler. The FBG element 5 reflects specific wavelengths to form the laser cavity 2 while transmitting the output laser. In this preferred embodiment, the FBG element 5 is a CFBG and its properties are defined at about 1060 nm for the central wavelength, 13.5 nm for the bandwidth, 11% of reflectivity, and an anomalous dispersion value of about 0.2 ps/nm.

After the FBG element 5, the signal propagates through a highly doped active fiber 6 having a length ranging from 20 cm to 2m that serves as the gain medium. According to this preferred embodiment, the active fiber 6 is a 60 cm long polarization-maintaining (PM) ytterbium-doped fiber. However, the invention is not limited to ytterbium fibers; other rare-earth doped fibers, such as those doped with Erbium (Er³⁺), Thulium (Tm³⁺), Holmium (Ho³⁺), or combinations thereof, may also be used depending on the desired operational wavelength.

To maintain polarization stability and suppress noise, in this preferred embodiment a fiber in-line polarizer 7 is spliced after the active fiber 6. Alternatively, or additionally, in another possible implementation a polarizer fiber coupler (not depicted in the figures) is included as an output coupler, allowing for adjustable coupling factors and enhancing the design's adaptability for various operational needs.

At the opposite end of the cavity 2, a SESAM 8 is used as the second cavity mirror. In this preferred embodiment, the SESAM has the following specifications: an absorbance of about 19%, saturation fluence of 90 µJ/cm², a damage threshold of 2 mJ/cm², and a recovery time of 10 ps. These parameters effectively support the generation of ultrashort pulses and contribute to the suppression of dispersive waves such as Kelly sidebands. Other SESAMs with different specifications may also be employed without departing from the invention's scope.

To ensure protection against back reflections that could destabilize or damage the cavity 2, a polarization-maintaining isolator (not depicted in the figures) may be spliced to the 1064 nm port of the WDM 4 to safeguard the cavity 2 while ensuring unidirectional operation. Other elements achieving the same technical purpose as the WDM may be used without departing from the invention's scope.

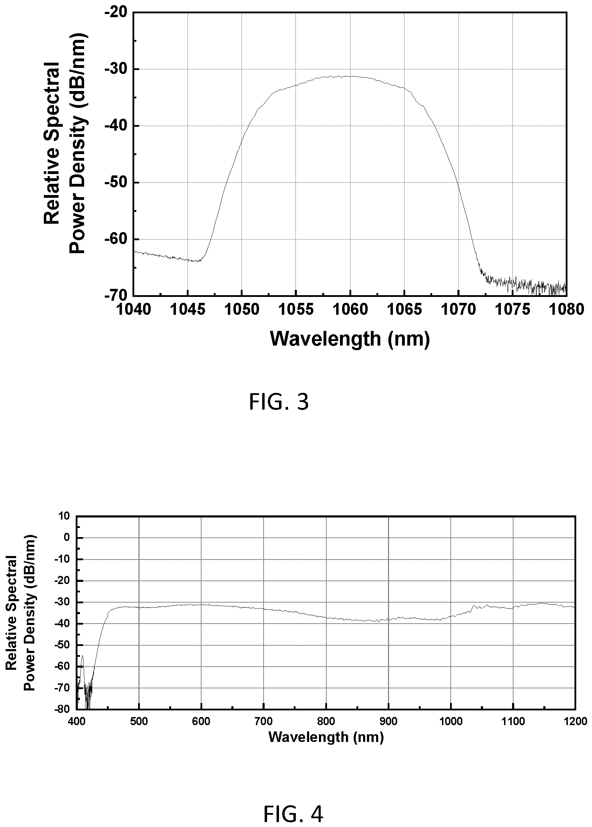

As shown in Figure 3, the configuration of this preferred embodiment achieves an output with a power of approximately 15 mW, a pulse repetition rate of around 80 MHz, a pulse duration of 3 ps, and a bandwidth of about 13 nm, making the system suitable for applications requiring high stability, short pulses, and a well-defined spectral output which has a spectral power density difference between the main spectral peak and any secondary peaks higher than 20 dB.

Within this specification, the term 'main peak' or 'main spectral peak' refers to the region of the optical spectrum where the power spectral density is at its maximum and/or where bandwidth is at its maximum. This peak corresponds to the dominant wavelength or wavelength range in the laser emission, where the majority of the emitted optical energy is concentrated. The term 'secondary peaks' or 'secondary spectral peaks' refer to the other regions of the optical spectrum that exhibit local maxima in the power spectral density but are lower in intensity compared to the main peak and/or present a narrower bandwidth than that of a main peak. These peaks are typically associated with dispersive waves, such as Kelly sidebands, which are undesirable as they interfere with the flatness and uniformity of the spectrum in supercontinuum generation.

The specific configuration of the oscillator 1 allows for optimized dispersion management within the cavity 2, resulting in effective suppression of these dispersive waves and/or ensuring that any dispersive waves generated are not amplified or reinforced within the cavity.

Referring to Figure 1, following the oscillator 1, the system 12 incorporates an amplifier 10 configured to boost the energy of the pulses generated by the oscillator 1 to levels sufficient for efficient supercontinuum generation in the subsequent stage.

In a preferred embodiment, amplifier 10 is a double-clad amplifier. The output of the oscillator cavity 2 is spliced to the input of a fiber combiner within the amplifier 10 and the fiber combiner output is spliced to a double-clad ytterbium-doped active fiber, which serves as the amplification medium. To safeguard the amplifier 10 against destabilization or damage cause by back reflections, a fiber isolator may be spliced at the output of the amplification section. Other configurations of the amplifier 10 may be used without departing from the invention's scope.

Referring to Figure 1, following the amplification section, in a preferred embodiment the fiber output of amplifier 10 is directly coupled to the input of a PCF 11 using a fused fiber splice. The PCF 11 serves as the non-linear medium for supercontinuum generation. The microstructured optical fiber is designed with a solid core extending along its longitudinal axis, surrounded by a cladding region. In this preferred embodiment, the PCF 11 has a length configurable between 1 m and 7 m. The length is selected to optimize non-linear interaction within the fiber while maintaining a balance between spectral broadening and power efficiency. As the amplified pulses propagate through the PCF 11, supercontinuum is generated. This results in an output characterized by a substantially flat spectral power distribution over a wide wavelength range, as shown in Figure 4. The flatness of the spectrum is achieved due to the seed pulses' absence of dispersive waves, such as Kelly sidebands, ensuring uniform intensity across the generated wavelengths. In this preferred embodiment, the spectral flatness is clearly shown with a difference in spectral power density of less than 10 dB within ±50 nm around the seed pulse wavelength.

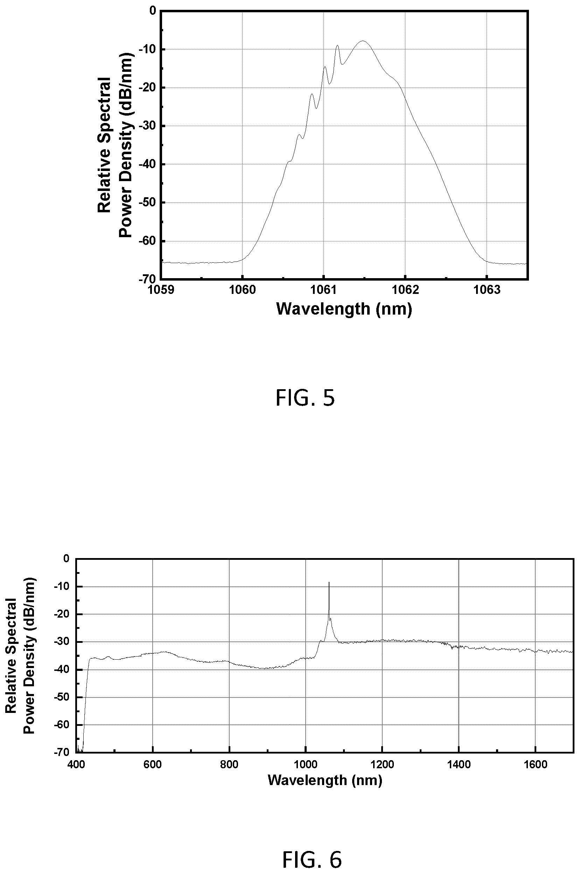

Referring to Figures 5 and 6, comparative graphical representations of a system configuration not according to the present invention are shown. The comparative system comprises a fiber mode-locked oscillator, an amplifier and a non-linear optical fiber. The oscillator comprises a laser cavity which in turn comprises a FBG and a SESAM. However, in this comparative example, the FBG is characterized in that it has a bandwidth of 0.7 nm, a reflectivity of about 99%, and a dispersion value greater than 1 ps/nm. This comparative configuration achieves an output with a power of approximately 10 mW, a pulse repetition rate of around 80 MHz, a pulse duration of 8 ps, and a bandwidth of about 0.3 nm. However, and as shown Figure 5, the spectral output has a spectral power density difference between the main peak and the secondary peak that is lower than 1.5 dB. This comparative configuration clearly shows non-optimized dispersion management within the cavity, with no effective reduction or suppression of dispersive waves. Thus, this comparative configuration results in dispersive waves being part of the amplified pulse propagating through the non-linear optical fiber to generate supercontinuum. As shown in Figure 6, this results in a non-uniform output, the residual components from the seed pulse being manifested as a spectral peak at around 1061 nm.

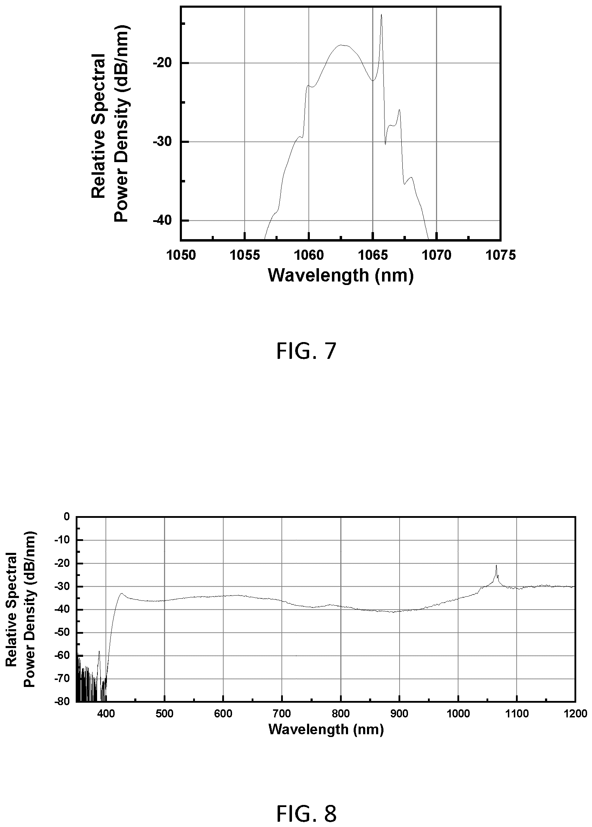

Referring to Figures 7 and 8, comparative graphical representations of another system configuration not according to the present invention are shown. The comparative system comprises a fiber mode-locked oscillator, an amplifier and a non-linear optical fiber. The oscillator comprises a laser cavity which in turn comprises a FBG and a SESAM. However, in this comparative example, the FBG is characterized in that it has a bandwidth of 7 nm, a reflectivity of about 55%, and a dispersion value of 0.82 ps/nm. This comparative configuration achieves an output with a power of approximately 8 mW, a pulse repetition rate of around 80 MHz, a pulse duration of 2 ps, and a bandwidth of about 3.5 nm. However, and as shown Figure 7, the spectral output has a secondary peak which is much narrower than that of the main peak. Specifically, the secondary peak has a bandwidth of less than 0.2 nm. This comparative configuration clearly shows non-optimized dispersion management within the cavity, with no effective reduction or suppression of dispersive waves. Thus, this comparative configuration results in dispersive waves being part of the amplified pulse propagating through the non-linear optical fiber to generate supercontinuum. As shown in Figure 8, this results in a non-uniform output, the residual components from the seed pulse being manifested as a spectral peak at around 1065 nm. Unless defined otherwise, all technical and scientific terms used herein have the same meaning as commonly understood to one of ordinary skill in the art to which the presently described subject matter pertains.

Where a range of values is provided, for example, a percentage range, it is understood that each intervening value, to the tenth of the unit of the lower limit, unless the context clearly dictates otherwise, between the upper and lower limit of that range and any other stated or intervening value in that stated range, is encompassed within the described subject matter. The upper and lower limits of these smaller ranges may independently be included in the smaller ranges, and such embodiments are also encompassed within the described subject matter, subject to any specifically excluded limit in the stated range.

It should be understood that the terms "a" and "an" as used above and elsewhere herein refer to "one or more" of the enumerated components. It will be clear to one of ordinary skill in the art that the use of the singular includes the plural unless specifically states otherwise. Therefore, the terms "a", "an" and "at least one" are used interchangeably in this application.

Unless otherwise indicated, all numbers expressing properties used in the specification and claims are to be understood as being modified in all instances by the term "about". Accordingly, unless indicated to the contrary, the numerical parameters set forth in this specification and claims are approximations that may vary depending upon the desired properties sought to be obtained by the present subject matter. At the very least, and not as an attempt to limit the application of the doctrine of equivalents to the scope of the claims, each numerical parameter should at least be construed in light of the number of reported significant digits and by applying ordinary rounding techniques.

Throughout the application, descriptions of various embodiments use "comprising" language; however, it will be understood by one of skill in the art that, in some instances, an embodiment can alternatively be described using the language "consisting essentially of" or "consisting of".

## Claims

1. A system (12) for generating supercontinuum pulsed emission having a substantially flat spectrum, the system comprising:
a fiber mode-locked oscillator (1) comprising a laser cavity (2);
an amplifier (10);
a non-linear optical fiber (11);
wherein the laser cavity comprises a Fiber Bragg Grating element (5) and a Semiconductor Saturable Absorber Mirror (8) configured to act as first and second mirrors respectively, the Fiber Bragg Grating element (5) having:
a. A bandwidth between 3 nm and 15 nm;
b. A reflectivity between 10 - 50%; and
c. A dispersion value such that the total dispersion of the laser cavity is in the anomalous dispersion regime.

2. The system (12) according to claim 1, wherein the Fiber Bragg Grating element (5) is further configured to act as a first output coupler of the laser cavity (2).

3. The system (12) according to claim 1 or 2, wherein the absolute dispersion value of the Fiber Bragg Grating element (5) is higher than the optical fiber's (11) dispersion value.

4. The system (12) according to any preceding claim, wherein the dispersion value of the Fiber Bragg Grating element (5) is between 0.1 ps/nm and 5 ps/nm.

5. The system (12) according to any preceding claim, wherein the bandwidth value of the Fiber Bragg Grating element (5) is between 11 nm and 15 nm, preferably between 13 nm and 14 nm, more preferably 13.5 nm.

6. The system (12) according to any preceding claim, wherein the reflectivity of the Fiber Bragg Grating element (5) is between 5 - 20%, preferably between 10 - 20%, more preferably 11%.

7. The system (12) according to any of the preceding claims, wherein the Semiconductor Saturable Absorber Mirror (8) has an absorbance between 10 - 60% and a relaxation time value between 500 fs and 20 ps, preferably an absorbance between 10 - 40% and a relaxation time value between 500 fs and 15 ps, more preferably an absorbance of 19% and a relaxation time of 10 ps.

8. The system (12) according to any of the preceding claims, wherein the laser cavity (2) further comprises an in-line fiber polarizer (7) configured to act as a polarizer.

9. The system (12) according to any of claims 2-7, wherein the laser cavity further comprises a Polarized Output Coupler configured to act as a polarizer and as a second output coupler.

10. The system (12) according to any of the preceding claims, wherein the oscillator (1) comprises a highly doped polarization maintaining active fiber (6), preferably an Ytterbium-doped polarization maintaining fiber.

11. The system (12) according to any preceding claim, wherein the non-linear optical fiber (11) is a Photonic Crystal Fiber.

12. The system (12) according to any preceding claims, wherein the oscillator (1) is configured to emit laser pulses with an optical spectrum having a main spectral peak and one or more secondary peaks, the power spectral density of the main spectral peak being at least 5 dB higher than that of the one or more secondary peaks, preferably 10 dB higher, more preferably 20 dB higher.

13. The system (12) according to any preceding claims, wherein a pulse at an output of the oscillator (1) comprises a pulse duration between 100 fs - 10 ps, a bandwidth between 3-20 nm, and an output power between 0.1 - 50 mW.

14. The system (12) according to any preceding claims, wherein the Fiber Bragg Grating element (5) is a Chirped Fiber Bragg Grating.

15. A method for generating supercontinuum pulsed emission having a substantially flat spectrum, comprising the following steps:
a) providing a system (12) according to any of claims 1-14;
b) producing, by the fiber mode-locked oscillator (1), at least one seed pulse with given optical properties;
c) controlling, by the Fiber Bragg Grating element (5), the power spectral density of the oscillator's emission such that the difference between the main spectral peak and the one or more secondary peaks is of at least 5 dB;
d) amplifying, by the amplifier (10), the resulting pulse from step c);
e) pumping the non-linear optical fiber (11) with the amplified pulse of step d).
